## Europäisches Patentamt
## European Patent Office
## Office européen des brevets

(19)

(11) Numéro de publication: **0 053 528**
**B1**

(12)

# FASCICULE DE BREVET EUROPEEN

(45) Date de publication du fascicule du brevet:
**29.08.84**

(51) Int. Cl.³: **B 60 T 8/18**

(21) Numéro de dépôt: **81401706.7**

(22) Date de dépôt: **27.10.81**

---

(54) Correcteur de pression de freinage.

---

(30) Priorité: **28.11.80 FR 8025291**
**11.06.81 FR 8111497**

(43) Date de publication de la demande:
**09.06.82 Bulletin 82/23**

(45) Mention de la délivrance du brevet:
**29.08.84 Bulletin 84/35**

(84) Etats contractants désignés:
**DE FR GB IT SE**

(56) Documents cités:
**FR - A - 1 282 714**
**FR - A - 2 112 043**
**FR - A - 2 322 034**
**GB - A - 1 239 289**
**GB - A - 1 385 180**

(73) Titulaire: **SOCIETE ANONYME D.B.A., Centre Paris Pleyel, F-93521 St-Denis Cédex 01 (FR)**

(72) Inventeur: **Pressaco, Pierre, 45 Rue E. Zola, F-93120 La Courneuve (FR)**

(74) Mandataire: **Poidatz, Emmanuel et al, Service Brevets Bendix 44 rue François 1er, F-75008 Paris (FR)**

---

BUNDESDRUCKEREI BERLIN

**Description**

L'invention concerne un correcteur de freinage asservi à la charge d'un véhicule, et plus particulièrement un correcteur du type comportant un boîtier destiné à être monté sur l'une des parties suspendue ou non-suspendue d'un véhicule, et dans lequel est disposée une valve de compensateur, un poussoir coopérant avec la valve pour solliciter cette dernière dans une direction sous l'effet d'un ressort de précharge exerçant sur le poussoir une poussée d'amplitude fixe, et un ressort d'asservissement ayant une extrémité fixée à l'autre des parties suspendue ou non-suspendue de véhicule et son autre extrémité couplée au poussoir par l'intermédiaire d'un élément de couplage s'étendant normalement coaxialement à ladite direction sous l'effet du ressort de précharge en portant, par son extrémité élargie opposée au ressort d'asservissement, contre une portée annulaire solidaire du boîtier, coaxiale à ladite direction.

Un agencement de ce type est décrit en relation avec les fig. 1 du document FR-A-1 282 714. Toutefois, dans le mode de réalisation des fig. 1 de ce document, le boîtier de correcteur est implanté avec son axe confondu avec la direction dans laquelle se produisent les débattements de la suspension, le ressort d'asservissement étant disposé également suivant cette direction. Or de telles possibilités d'implantation n'existent pas forcément dans tous les véhicules et il est parfois nécessaire — notamment si l'on veut associer le correcteur directement à un cylindre de roue — d'implanter le boîtier du correcteur suivant une orientation différente, notamment suivant une orientation sensiblement perpendiculaire à la direction des débattements de la suspension.

A cette fin, le document FR-A-1 282 714 suggère de recourir, conformément aux fig. 3, à un renvoi à levier, le ressort d'asservissement étant disposé parallèlement au boîtier de compensateur, ce dernier présentant par ailleurs un agencement général profondément modifié. D'autre part, un renvoi avec un levier pivotant autour d'un axe impose une disposition particulière pour le ressort d'asservissement dans le plan de débattement du levier, de sorte que si l'on désire, pour une raison quelconque, faire pivoter, en vue de son Implantation, le boîtier de correcteur par rapport à son axe propre, il y a lieu de concevoir un nouveau boîtier pour tenir compte d'un renvoi à levier.

La présente invention a pour objet d'éviter de tels inconvénients en proposant un correcteur simple et efficace, permettant d'implanter le boîtier perpendiculairement à la direction des débattements de la suspension avec une disposition de couplage avec le ressort d'asservissement indifférente à l'orientation du boîtier autour de son axe, et ne modifiant pas le point de coupure déterminé par la sollicitation du ressort de précharge.

Pour ce faire, selon une caractéristique de l'invention, l'élément de couplage fait saillie hors du boîtier, le ressort d'asservissement étant relié à l'extrémité extérieure de l'élément de couplage et s'étendant dans une direction sensiblement perpendiculaire à ladite direction de la sollicitation du ressort de précharge laquelle est transmise à l'élément de couplage par une liaison du type à rotule.

Selon une autre caractéristique de l'invention, le poussoir, le ressort de précharge et l'extrémité élargie de l'élément de couplage sont disposés dans un logement tubulaire monté sur ledit boîtier et formant ladite portée annulaire et siège d'appui fixe pour une extrémité du ressort de précharge. Avec un tel agencement, le tarage du ressort de précharge peut être réglé avec précision, ce réglage n'étant pas affecté en fonctionnement comme sus-mentionné.

L'invention sera maintenant décrite en se référant aux dessins annexés dans lesquels:

la fig. 1 est une vue en coupe longitudinale partielle d'un premier mode de réalisation d'un correcteur de freinage selon l'invention,

la fig. 2 est une vue en coupe longitudinale d'un second mode de réalisation d'un correcteur de freinage selon l'invention,

la fig. 3 est une vue en coupe longitudinale d'un troisième mode de réalisation d'un correcteur de freinage selon l'invention,

la fig. 4 est une vue en coupe longitudinale d'un quatrième mode de réalisation d'un correcteur de freinage selon l'invention.

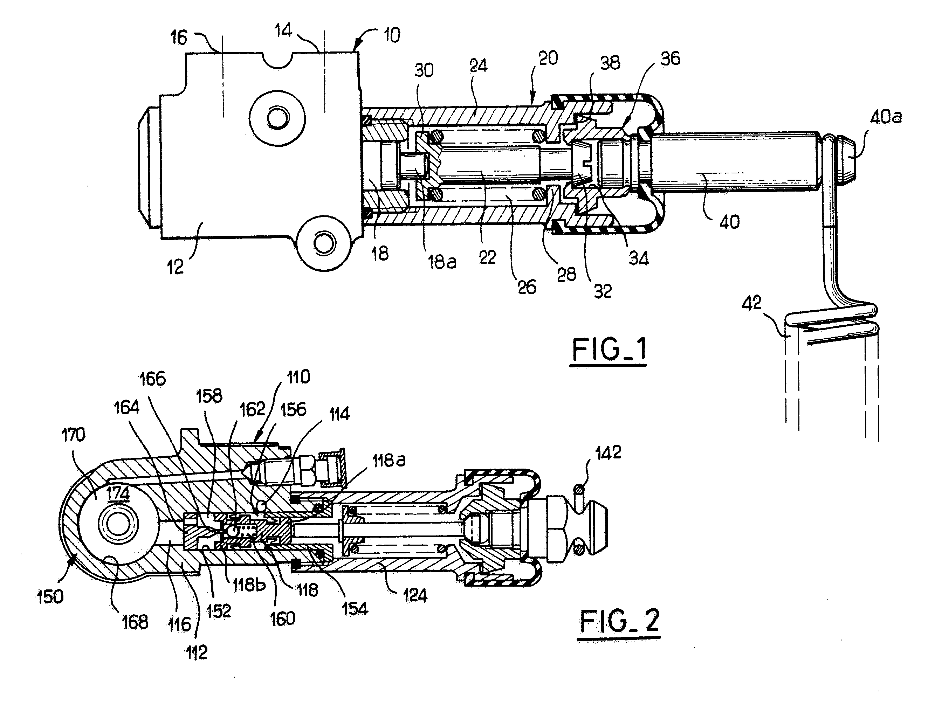

Si l'on considère la fig. 1, un correcteur de freinage 10 comprend un boîtier 12 pourvu d'un orifice d'entrée 14 et d'un orifice de sortie 16.

L'orifice d'entrée 14 est relié à une source de fluide sous pression qui consiste par exemple en un maître cylindre de freinage (non représenté) et l'orifice de sortie 16 est relié à un ou plusieurs moteurs de frein (également non représentés). Enfin, le boîtier 12 est fixé sur le chassis du véhicule.

La structure interne du boîtier 12 n'est pas représentée en détail à cette figure mais l'on pourra se reporter à la fig. 2 et à la description qui s'y réfère pour comprendre cette structure interne.

A ce stade de la description, il sera simplement dit qu'une valve de compensateur est montée dans le boîtier 12 et que cette valve est commandée par un piston de compensateur 18 dont une extrémité 18a se projette hors du boîtier 12.

Sur le boîtier 12 est fixé un ensemble d'asservissement 20 destiné à appliquer au piston 18 une force variable en fonction de la charge du véhicule.

Comme représenté, l'ensemble d'asservissement 20 comprend un poussoir 22 abrité dans un logement tubulaire 24 fixé lui-même sur le boîtier 12, par exemple par vissage. Un ressort de précharge 26 prend appui sur un épaulement rentrant 28 du logement 24 et sur une bride externe 30 du poussoir 22 pour solliciter ce dernier et le piston 18 vers l'intérieur du boîtier 12. A son extrémité opposée au piston 18, le poussoir 22 comprend une tête élargie 32 reçue dans une cavité 34 d'un dispositif de renvoi 36, lui-même en appui sur une portée plane constituée par un siège annulaire 38 défini à l'extrémité du logement tubulaire 24.

Le dispositif de renvoi 36 comprend un prolongement axial 40 dont l'extrémité libre 40a reçoit en accrochage un ressort d'asservissement 42 qui s'étend sensiblement perpendiculairement au prolongement 40.

A son autre extrémité, le ressort 42 est relié à une partie non suspendue du véhicule, de manière non représentée.

L'ensemble d'asservissement 20 exerce par conséquent sur le piston 18 une force de commande obtenue par composition d'une poussée de précharge d'amplitude fixe exercée sur le poussoir 22 par le ressort de précharge 26 et d'une traction d'asservissement d'amplitude variable en fonction inverse de la charge de véhicule exercée par le ressort 42 par l'intermédiaire du dispositif de renvoi 36.

On notera que de cette manière, le dispositif de renvoi 36 est monté pivotant par rapport au boîtier par une articulation du type à rotule, de telle sorte qu'il n'existe aucune orientation préférentielle pour le ressort 42 dans un plan sensiblement perpendiculaire à l'axe du dispositif de renvoi, ce qui ne serait pas le cas si la transmission de l'effort du ressort 42 sur le poussoir 22 était assurée par un système classique à levier. Ceci permet un grand choix à la fois quant à l'implantation du boîtier 12 sur le chassis du véhicule et quant au point d'accrochage de l'autre extrémité du ressort 42 sur une partie non suspendue du véhicule. Dans le cas présent, le type d'articulation à rotule qui a été choisi peut être défini comme une articulation à rotule et à portée plane.

Par ailleurs, le tarage à vide du ressort de précharge 26 peut être assuré de manière indépendante en agissant sur le vissage du logement tubulaire 24 sur le boîtier 12. De même, on conçoit que le montage du ressort d'asservissement 42 peut permettre un tarage indépendant de ce ressort.

Dans le mode de réalisation illustré à la fig. 2, le correcteur 110 est directement associé à un cylindre de roue 150. Tous les éléments de ce correcteur qui sont identiques à ceux du premier mode de réalisation sont désignés par les mêmes numéros de référence augmentés de la valeur 100.

A cette figure, on a illustré en détail la structure interne du boîtier 112. Dans ce dernier est prévu un alésage 152 dans lequel débouchent l'orifice d'entrée 114 et l'orifice de sortie 116. Entre l'orifice d'entrée 114 et l'extrémité ouverte de l'alésage 152 est monté un fourreau 154, ce dernier est maintenu en place par le logement tubulaire 124. Le piston 118 est étagé et comprend une partie de petit diamètre 118a coulissant dans le fourreau 154 et une partie de grand diamètre 118b coulissant dans l'alésage 152 entre l'orifice d'entrée 114 et l'orifice de sortie 116.

Le piston 118 et l'alésage 152 définissent entre eux d'une part une chambre d'entrée 156 adjacente à l'orifice d'entrée 114 et d'autre part une chambre de sortie 158 adjacente à l'orifice de sortie 116. Un passage 160, prévu dans le piston 118, relie les deux chambres 156 et 158 et une valve à bille 162 est montée dans le passage 160 pour commander l'écoulement de liquide de frein dans ce passage. Une butée 164, montée au fond de l'alésage 152, comporte un doigt 166 qui se projette en direction de la bille de la valve 162 pour provoquer l'ouverture de cette dernière lorsque le piston se déplace en rapprochement de cette butée.

Dans ce mode de réalisation, le correcteur 110 est directement associé à un cylindre de roue 150 de la manière suivante:

le boîtier 112 comprend un second alésage 168, sensiblement perpendiculaire à l'alésage 152, aux deux extrémités duquel coulissent deux pistons moteurs 170 et 172, le premier étant seul représenté à cette figure. Entre les deux pistons moteurs est définie une chambre de travail 174 qui communique directement avec l'orifice de sortie 116. On conçoit que grâce à ce mode de réalisation, on dispose ainsi d'un ensemble »correcteur + cylindre de roue« particulièrement compact.

On notera que dans ce cas, le boîtier du correcteur est fixé à une partie non suspendue du véhicule et que l'extrémité libre du ressort d'asservissement 142 est reliée au chassis du véhicule. Naturellement, ce type d'implantation peut également être choisi pour le premier mode de réalisation.

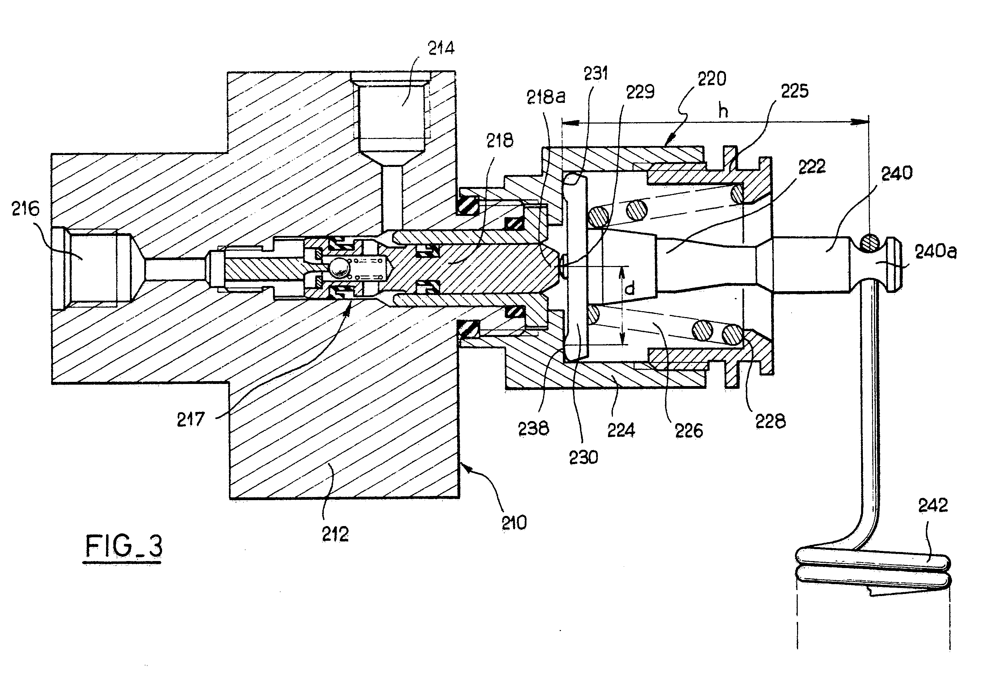

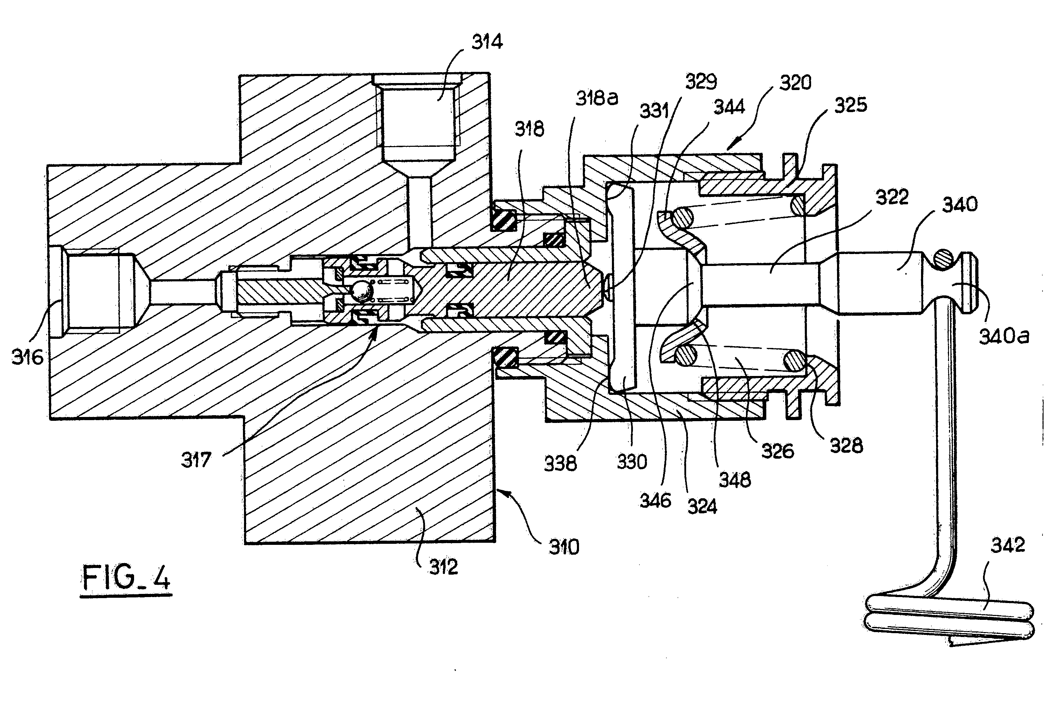

Pour la description des appareils des fig. 3 et 4, les éléments identiques à ceux des correcteurs des fig. 1 et 2 porteront le même numéro de référence, augmenté respectivement des valeurs 200 et 300.

Ainsi, à la fig. 3, le correcteur 210 comprend un boîtier 212 fixé sur le chassis du véhicule et pourvu d'un orifice d'entrée 214 et d'un orifice de sortie 216, l'orifice d'entrée étant relié au maître-cylindre (non représenté) du véhicule et l'orifice de sortie étant relié aux moteurs de freins arrière (également non représentés). Dans le boîtier 212 est montée une valve de correcteur 217 qui est commandée par un piston de correcteur 218 dont une extrémité 218a se projette hors du boîtier 212.

La valve de correcteur 217 étant identique à celle de la fig. 2, ne sera pas décrite en détail.

Sur le boîtier 212 est fixé un ensemble d'asservissement 220 destiné à appliquer au piston 218 une force variable en fonction de la charge du véhicule.

Comme représenté, l'ensemble d'asservissement 220 comprend un poussoir 222 abrité dans un logement tubulaire 224 fixé lui-même sur le boîtier 212, par exemple par vissage. Un ressort de précharge 226 prend appui sur un épaulement rentrant 228 du logement 224 et sur une bride externe 230 du poussoir 222 pour solliciter ce dernier et le piston 218 vers l'intérieur du boîtier 212.

Dans ce mode de réalisation, le poussoir 222 constitue lui-même un dispositif de renvoi, de la manière suivante: la bride 230 prend appui sur une portée plane constituée par un siège annulaire 238 défini dans le logement tubulaire 224 et le poussoir 222 comprend un prolongement axial 240 dont l'extrémité libre 240a reçoit en accrochage un ressort d'asservissement 242 qui s'étend sensiblement perpendiculairement au poussoir 222. A son autre extrémité, le ressort 242 est relié à une partie non suspendue du véhicule de manière non représentée.

L'ensemble d'asservissement 220 exerce par conséquent sur le piston 218 une force de commande obtenue par composition d'une poussée axiale de précharge d'amplitude fixe exercée sur le poussoir 222 par le ressort de précharge 226 et d'une traction axiale d'asservissement d'amplitude variable en fonction inverse de la charge du véhicule, cette traction axiale d'asservissement résultant, par basculement du poussoir 222 sur la portée 238, de la force exercée par le ressort 242 sur l'extrémité libre 240a du poussoir 222.

On notera que le poussoir 222 est en contact avec le piston 218 par l'intermédiaire d'une saillie arrondie 229 de sorte que la force exercée par le poussoir 222 sur le piston 218 reste constamment parallèle à l'axe de ce dernier.

Enfin, la face 231 par laquelle la bride 230 prend appui sur le siège annulaire 238 est profilée de telle manière que quelque soit l'angle de basculement du poussoir, le rapport des distances (h) et (d) reste constant, la distance (h) étant la distance séparant axialement le siège annulaire 238 du point d'accrochage du ressort d'asservissement 242 sur l'extrémité 240a du poussoir, et la distance (d) étant la distance radiale séparant le point de contact entre le poussoir 229 et le piston 218 du point de contact entre le poussoir 231 et son siège annulaire 238.

En annexe, on remarquera que l'épaulement rentrant 228 sur lequel prend appui le ressort de précharge 226 est défini sur une bague 225 montée axialement réglable sur le logement tubulaire 224, par exemple par vissage. De la sorte, on peut aisément faire varier le tarage initial du ressort de précharge 226.

Ce correcteur présente, par rapport aux modes de réalisation précédents, les avantages suivants:

— reduction de l'encombrement axial du correcteur,
— diminution du nombre de pièces,
— simplification de l'assemblage,

sans altérer les avantages déjà procurés par les correcteurs précédents.

A la fig. 4, le correcteur 310 comporte la modification suivante: le ressort de précharge 326 prend appui sur le poussoir 322 par l'intermédiaire d'une coupelle 344, le poussoir 322 et la coupelle 344 comportant deux portées sphériques 346 et 348 complémentaires.

L'avantage d'une telle disposition est d'éviter la distorsion du ressort de précharge 326 lors du basculement du poussoir 322, en particulier si l'on considère que ce basculement peut s'effectuer dans n'importe quelle direction.

Dans le cas du correcteur 210 de la fig. 3, la force de précharge exercée par le ressort 226 sur le poussoir 222 lors du basculement de ce dernier peut subir des variations en fonction de la direction de basculement en raison du fait que les spires de ce ressort subissent des déformations différentes selon cette direction de basculement.

Au contraire, dans le correcteur de la fig. 4, le ressort de précharge 326 subit une compression sensiblement axiale quelle que soit la direction de basculement du poussoir 322, par le fait que la coupelle 344 reste parallèle à elle-même, par basculement sur la portée sphérique 348 du poussoir 322. On évite ainsi l'inconvénient précédemment cité.

## Revendications

1. Correcteur de pression de freinage asservi à la charge d'un véhicule, comportant un boîtier (10, 24; 110, 124; 310, 324) destiné à être monté sur l'une des parties suspendue ou non-suspendue d'un véhicule et dans lequel est disposée une valve de compensateur, un poussoir (22; 322) coopérant avec la valve pour solliciter cette dernière dans une direction sous l'effet d'un ressort de précharge (26; 326) exerçant sur le poussoir une poussée d'amplitude fixe, et un ressort d'asservissement (42; 142; 342) ayant une extrémité fixée à l'autre des parties suspendue ou non-suspendue de véhicule et son autre extrémité couplée au poussoir par l'intermédiaire d'un élément de couplage (40; 340) s'étendant normalement coaxialement à ladite direction sous l'effet du ressort de précharge en portant, par son extrémité élargie opposée au ressort d'asservissement, contre une portée annulaire (38; 338) solidaire du boîtier, coaxiale à ladite direction, caractérisé en ce que l'élément de couplage (40; 340) fait saillie hors du boîtier, le ressort d'asservissement (42; 142; 342) étant relié à l'extrémité extérieure (40a; 340a) de l'élément de couplage et s'étendant dans une direction sensiblement perpendiculaire à ladite direction de la sollicitation du ressort de précharge (26; 326) laquelle est ransmise à l'élément de couplage par une liaison du type à rotule (32, 34; 344, 346).

2. Correcteur selon la revendication 1, caractérisé en ce que le poussoir (22; 322), le ressort de précharge (26; 326) et l'extrémité élargie de l'élément de couplage (40; 340) sont disposés dans un logement tubulaire (24; 124; 324) monté sur ledit boîtier (10; 110; 310) et formant ladite portée annulaire (38; 338) et siège d'appui fixe (28; 328) pour une extrémité du ressort de précharge.

3. Correcteur selon la revendication 2, caractérisé en ce que le poussoir (22) comporte, au voisinage de la valve de compensateur, une surface d'appui (30) pour l'autre extrémité du ressort de précharge (26) et, à son extrémité opposée, une tête (32) reçue dans une cavité (34) formée dans l'extrémité élargie de l'élément de couplage (40).

4. Correcteur selon la revendication 2, caractérisé en ce que l'élément de couplage (340) est constitué par un prolongement du poussoir (322) lequel comporte une portée sphérique (346) coopérant avec une partie sphérique complémentaire (348) d'une coupelle (344) formant surface d'appui pour l'autre extrémité du ressort de précharge (326).

5. Correcteur selon la revendication 4, caractérisé en ce que l'extrémité élargie de l'élément de couplage (340) comporte une bride radiale (330) dont la face portant sur la portée annulaire (338) est profilée de manière à maintenir constant le rapport h, h étant la distance séparant le point d'accrochage du ressort d'asservissement (342) de cette portée annulaire, et d étant la distance radiale entre le point de contact entre bride et portée annulaire et l'axe du poussoir.

6. Correcteur selon l'une des revendications précédentes, caractérisé en ce que le boîtier (10; 110; 310) est monté sur une partie (150) non-suspendue du véhicule.

7. Correcteur selon la revendication 6, caractérisé en ce que le boîtier de correcteur (110) est solidaire d'un boîtier de cylindre de roue (150) et comporte un orifice de sortie de fluide (116) communiquant avec l'orifice de fluide (114) du cylindre.

## Patentansprüche

1. Lastabhängiger Bremsdruckregler für ein Fahrzeug, mit einem Gehäuse (10, 24; 110, 124; 310, 324), das an einem aufgehängten oder nicht aufgehängten Teil des Fahrzeuges anbringbar ist und in dem ein Ausgleichsventil angeordnet ist, einem Stößel (22; 322), der mit dem Ausgleichsventil zusammenwirkt, um das letztere in einer Richtung vorzuspannen, und zwar unter der Wirkung einer Vorspannfeder (26; 326), die auf den Stößel eine Schubkraft vorgegebener Amplitude ausübt, und einer Regelfeder (42; 142; 342), die mit einem Ende an dem jeweils anderen aufgehängten bzw. nicht aufgehängten Teil des Fahrzeuges befestigt ist und mit ihrem anderen Ende mit dem Stößel verbunden ist über ein Kupplungselement (40; 340), das sich normalerweise koaxial zu der besagten Richtung unter der Wirkung der Vorspannfeder erstreckt, wobei es mit seinem der Regelfeder gegenüberliegenden erweiterten Ende an einem mit dem Gehäuse fest verbundenen, zu der besagten Richtung koaxialen, ringförmigen Anschlag (38; 338) anliegt, dadurch gekennzeichnet, daß das Kupplungselement (40; 340) aus dem Gehäuse vorsteht, wobei die Regelfeder (42; 142; 342) am äußeren Ende (40a; 340a) des Kupplungselementes angebracht ist und sich in einer Richtung im wesentlichen senkrecht zur Richtung der Vorspannung der Vorspannfeder (26; 326) erstreckt, welche auf das Kupplungselement durch eine Gelenkverbindung (32, 34; 344, 346) übertragen wird.

2. Bremsdruckregler nach Anspruch 1, dadurch gekennzeichnet, daß der Stößel (22; 322), die Vorspannfeder (26; 326) und das erweiterte Ende des Kupplungselementes (40; 340) in einer Lagerhülse (24; 124; 324) angeordnet sind, die am Gehäuse (10; 110; 310) angebracht ist und den ringförmigen Anschlag (38; 338) und eine feste Abstützung (28; 328) für ein Ende der Vorspannfeder bildet.

3. Bremsdruckregler nach Anspruch 2, dadurch gekennzeichnet, daß der Stößel (22) in Nähe des Ausgleichsventils eine Abstützfläche (30) für das andere Ende der Vorspannfeder (26) und an seinem entgegengesetzten Ende einen Kopf (32) aufweist, der in einem Hohlraum (34) untergebracht ist, der in dem erweiterten Ende des Kupplungselementes (40) gebildet ist.

4. Bremsdruckregler nach Anspruch 2, dadurch gekennzeichnet, daß das Kupplungselement (340) von einer Verlängerung des Stößels (322) gebildet wird, die einen sphärischen Anschlag (346) aufweist, der mit einem komplementären sphärischen Abschnitt (348) einer Scheibe (344) zusammenwirkt, die die Abstützfläche für das andere Ende der Vorspannfeder (326) bildet.

5. Bremsdruckregler nach Anspruch 4, dadurch gekennzeichnet, daß das erweiterte Ende des Kupplungselementes (340) einen radialen Flansch (330) aufweist, dessen an dem ringförmigen Anschlag (338) anliegende Stirnseite so profiliert ist, daß das Verhältnis h/d konstant bleibt, worin h der Abstand zwischen dem Verankerungspunkt der Regelfeder (342) und dem ringförmigen Anschlag ist und d der radiale Abstand zwischen dem Berührungspunkt von Flansch und ringförmigem Anschlag und der Achse des Stößels ist.

6. Bremsdruckregler nach einem der vorhergehenden Ansprüche, dadurch gekennzeichnet, daß das Gehäuse (10; 110; 310) an einem nicht aufgehängten Abschnitt (150) des Fahrzeuges angebracht ist.

7. Bremsdruckregler nach Anspruch 6, dadurch gekennzeichnet, daß das Gehäuse (110) mit einem Gehäuse eines Radbremszylinders (150) fest verbunden ist und eine Strömungsmittelauslaßöffnung (116) aufweist, die mit der Strömungsmittelöffnung (114) des Radbremszylinders verbunden ist.

## Claims

1. A brake pressure proportioning valve responsive to the load of a vehicle, comprising a casing (10, 24; 110, 124; 310, 324) to be mounted to one of the suspended or non-suspended portions of a vehicle and receiving a compensation valve, a pusher (22; 322) cooperating with the compensation valve for biasing the latter in one direction under the action of a preloading spring (26; 326) applying a pushing force of fixed amplitude upon the pusher, and a control spring (42; 142; 342) having one end fixed to the other of the suspended or non-suspended portions of the vehicle and its other end coupled to the pusher by a coupling member (40; 340) normally extending coaxial to said direction under the action of the preloading spring by being supported at its enlarged end opposite to the control spring against an annular abutment (38; 338) integral with said casing and coaxial to said direction, characterized in that the coupling member (40; 340) projects from the casing, the control spring (42; 142; 342) being connected to the external end (40a; 340a) of the coupling member and extending in a direction substantially perpendicular to said direction of biasing of the preloading spring (26; 326) which is transmitted to the coupling member by a joint of the articulated type (32, 34; 344, 346).

2. The proportioning valve of claim 1 characterized in that the pusher (22; 322), the preloading spring (26; 326) and the enlarged end of the coupling member (40; 340) are disposed within a bearing sleeve (24; 124; 324) mounted on said casing (10; 110; 310) and forming said annular abutment (38; 338) and a fixed support (28; 328) for one end of the preloading spring.

3. The proportioning valve of claim 2, characterized in that the pusher (22) comprises adjacent to the compensating valve a support surface (30) for the other end of the preloading spring (26) and at its opposite end a head (32) received within a cavity (34) formed in the enlarged end of the coupling member (40).

4. The proportioning valve of claim 2 characterized in that the coupling member (340) is comprised of an extension of the pusher (322), which comprises a sperical abutment (346) cooperating with a complementary spherical portion (348) of a disc (344) forming an abutment surface for the other end of the preloading spring (326).

5. The proportioning valve of claim 4 characterized in that the enlarged end of the coupling member (340) comprises a radial flange (330) having a face supported on the annular abutment (338) and having a profile such as to maintain a constant ratio h/d, wherein h is the distance separating the anchoring point of the control spring (342) and said annular abutment, and d is the radial distance between the point of contact of flange and annular abutment and the axis of the pusher.

6. The proportioning valve of any of the preceding claims characterized in that the casing (10; 110; 310) is mounted on a non-suspended portion (150) of the vehicle.

7. The proportioning valve of claim 6 characterized in that the casing (110) is integral with a casing of a wheel cylinder (150) and comprises a fluid outlet orifice (116) communicating with the fluid orifice (114) of the cylinder.

FIG_1

FIG_2

0 053 528

FIG_3

FIG_4